# EUROPEAN PATENT APPLICATION

(11) **EP 4 380 015 A1**
(43) Date of publication of application: **05.06.2024**
(21) Application number: 22880758.2
(22) Date of filing: 26.09.2022
(51) Int. Cl.: H02K 5/22, H02K 11/215

(54) **VEHICLE DRIVE DEVICE**

(30) Priority: 12.10.2021 JP 2021167256
(71) Applicant: AISIN CORPORATION, Kariya-shi, Aichi 448-8650 (JP)
(72) Inventor: NIMURA, Kazuhisa, Kariya-shi, Aichi 448-8650 (JP); ONISHI, Toshihiko, Kariya-shi, Aichi 448-8650 (JP); ENOMOTO, Kazuhito, Kariya-shi, Aichi 448-8650 (JP)
(74) Representative: Kramer Barske Schmidtchen Patentanwälte PartG mbB
(86) International application number: PCT/JP2022/035682
(87) International publication number: WO 2023/063062

(57) **Abstract**

Disclosed is a vehicle drive device including a rotary electric machine, a power transmission mechanism connected to one axial end side of a rotary shaft member of the rotary electric machine, a drive device, a housing member that forms inside a first housing chamber that houses the rotary electric machine and a second housing chamber that houses the power transmission mechanism, and retains oil in the first housing chamber and the second housing chamber, a rotation angle sensor provided on the one axial end side of the rotary shaft member in the first housing chamber and configured to acquire rotation angle information of the rotary electric machine, a board that supports the rotation angle sensor, and a wire that electrically connects the rotation angle sensor and the drive device. The housing member includes a first partition wall portion that separates the first housing chamber and the second housing chamber in an axial direction. The board is supported by the first partition wall portion so as to extend along the first partition wall portion and abut against the first partition wall portion in the axial direction. The wire includes a first partition wall-side connector on a side of the board that abuts against the first partition wall portion in the axial direction and above the rotary shaft member.

## Description

### TECHNICAL FIELD

The present disclosure relates to a vehicle drive device.

### BACKGROUND ART

There is known a technology in which a rotation angle sensor that acquires rotation angle information of a rotary electric machine is disposed at an end of the rotary electric machine opposite to an output end and the rotation angle sensor and a control device are electrically connected by wiring.

### Related Art Documents

### Patent Documents

Patent Document 1: WO2019/022105

### SUMMARY OF THE INVENTION

### Problem to be Solved by the Invention

In the above related art, however, a resolver chamber and a resolver cover are required to dispose the resolver and the number of components increases. Further, an electrical wire for the resolver needs to be routed first when attaching the motor. Thus, there is a problem that the ease of attaching the motor is likely to decrease.

In one aspect, the present disclosure has an object to reduce the number of components related to a rotation angle sensor and to improve the ease of attaching a rotary electric machine.

### Means for Solving the Problem

One aspect of the present disclosure provides a vehicle drive device including: a rotary electric machine having an axial direction intersecting an up-down direction; a power transmission mechanism connected to one axial end side of a rotary shaft member of the rotary electric machine and configured to transmit, to a wheel, power based on rotational torque generated by the rotary electric machine; a drive device configured to drive the rotary electric machine; a housing member that forms inside a first housing chamber that houses the rotary electric machine and a second housing chamber that houses the power transmission mechanism, includes a first partition wall portion that separates the first housing chamber and the second housing chamber in the axial direction, and retains oil in the first housing chamber and the second housing chamber; a rotation angle sensor mounted on a board supported by the first partition wall portion in the first housing chamber and configured to acquire rotation angle information of the rotary electric machine; and a wire that electrically connects the rotation angle sensor and the drive device. The wire includes a first partition wall-side connector on a side of the board that faces the first partition wall portion in the axial direction and above the rotary shaft member.

### Effects of the Invention

According to the present disclosure, it is possible to reduce the number of components related to the rotation angle sensor and to improve the ease of attaching the rotary electric machine.

### BRIEF DESCRIPTION OF THE DRAWINGS

[FIG. 1] FIG. 1 is a skeleton diagram of a vehicle drive system including a rotary electric machine and a power transmission mechanism.
[FIG. 2] FIG. 2 is a sectional view schematically showing a main part of a vehicle drive device.
[FIG. 2A] FIG. 2A is an enlarged view of a portion Q1 in FIG. 2.
[FIG. 3] FIG. 3 is a diagram schematically showing a gear housing chamber and an inverter housing chamber when a first partition wall portion is viewed from an X1 side in an X direction.
[FIG. 4] FIG. 4 is an illustration of a connector cover and is an enlarged view of a portion Q2 in FIG. 3.
[FIG. 5] FIG. 5 is a schematic sectional view illustrating a labyrinth structure of a connector.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

Hereinafter, a vehicle drive system 100 to which a vehicle drive device 17 according to the present embodiment is suitably applicable will be described first, and then the vehicle drive device 17 according to the present embodiment will be described.

### [Overall Drive System]

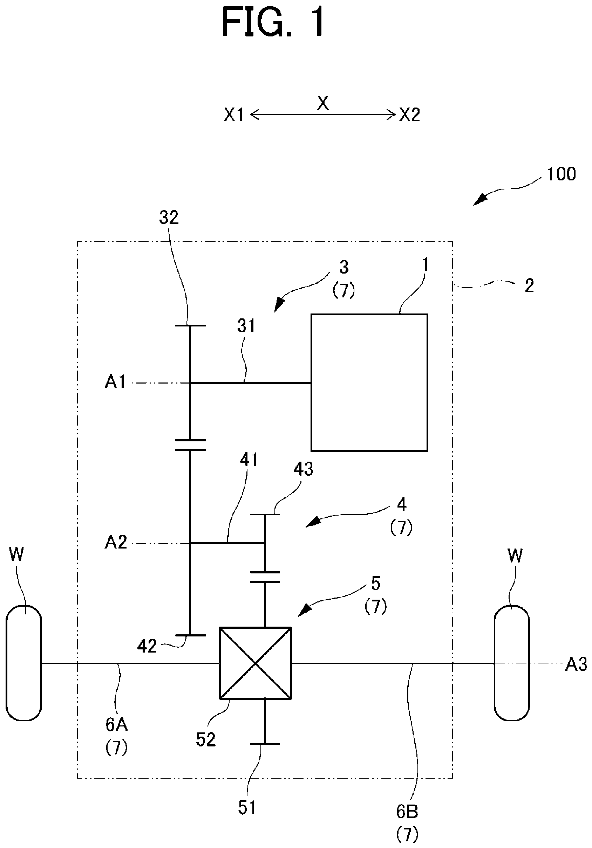

FIG. 1 is a skeleton diagram of the vehicle drive system 100 including a rotary electric machine 1 and a power transmission mechanism 7. In FIG. 1, an X direction and X1 and X2 sides in the X direction are defined. The X direction is parallel to the direction of a first axis A1 (hereinafter also referred to as "axial direction").

The vehicle drive system 100 is mounted on a vehicle. Any type of vehicle may be adopted, and the vehicle may be a four-wheeled vehicle or a vehicle other than the four-wheeled vehicle.

In the example shown in FIG. 1, the vehicle drive system 100 includes the rotary electric machine 1 serving as a driving source for wheels W of the vehicle and the power transmission mechanism 7 provided in a power transmission path connecting the rotary electric machine 1 and the wheels W. The power transmission mechanism 7 includes an input member 3, a counter gear mechanism 4, a differential gear mechanism 5, and left and right output members 6A, 6B.

The input member 3 includes an input shaft 31 and an input gear 32. The input shaft 31 is a rotary member that rotates about the first axis A1. The input gear 32 is a gear that transmits rotational torque (driving force) from the rotary electric machine 1 to the counter gear mechanism 4. The input gear 32 is provided to the input shaft 31 of the input member 3 so as to rotate integrally with the input shaft 31 of the input member 3.

The counter gear mechanism 4 is disposed between the input member 3 and the differential gear mechanism 5 in the power transmission path. The counter gear mechanism 4 includes a counter shaft 41, a first counter gear 42, and a second counter gear 43.

The counter shaft 41 is a rotary member that rotates about a second axis A2. The second axis A2 extends parallel to the first axis A1. The first counter gear 42 is an input element of the counter gear mechanism 4. The first counter gear 42 meshes with the input gear 32 of the input member 3. The first counter gear 42 is connected to the counter shaft 41 so as to rotate integrally with the counter shaft 41.

The second counter gear 43 is an output element of the counter gear mechanism 4. In the present embodiment, the second counter gear 43 has, for example, a smaller diameter than the first counter gear 42. The second counter gear 43 is provided to the counter shaft 41 so as to rotate integrally with the counter shaft 41.

The differential gear mechanism 5 is disposed on a third axis A3 serving as a rotation axis of the differential gear mechanism 5. The third axis A3 extends parallel to the first axis A1. The differential gear mechanism 5 distributes the driving force transmitted from the rotary electric machine 1 side to the left and right output members 6A, 6B. The differential gear mechanism 5 includes a differential input gear 51, and the differential input gear 51 meshes with the second counter gear 43 of the counter gear mechanism 4. The differential gear mechanism 5 includes a differential case 52, and the differential case 52 houses a pinion shaft, pinion gears, left and right side gears, etc. The left and right side gears are connected to the left and right output members 6A, 6B so as to rotate integrally with the left and right output members 6A, 6B, respectively.

The left and right output members 6A, 6B are drivingly connected to the left and right wheels W, respectively. Each of the left and right output members 6A, 6B transmits the driving force distributed by the differential gear mechanism 5 to the wheel W. The left and right output members 6A, 6B may be each composed of two or more members.

The rotary electric machine 1 thus drives the wheels W via the power transmission mechanism 7. In other embodiments, other speed reducing mechanisms such as a planetary gear mechanism may be used.

### [Vehicle Drive Device]

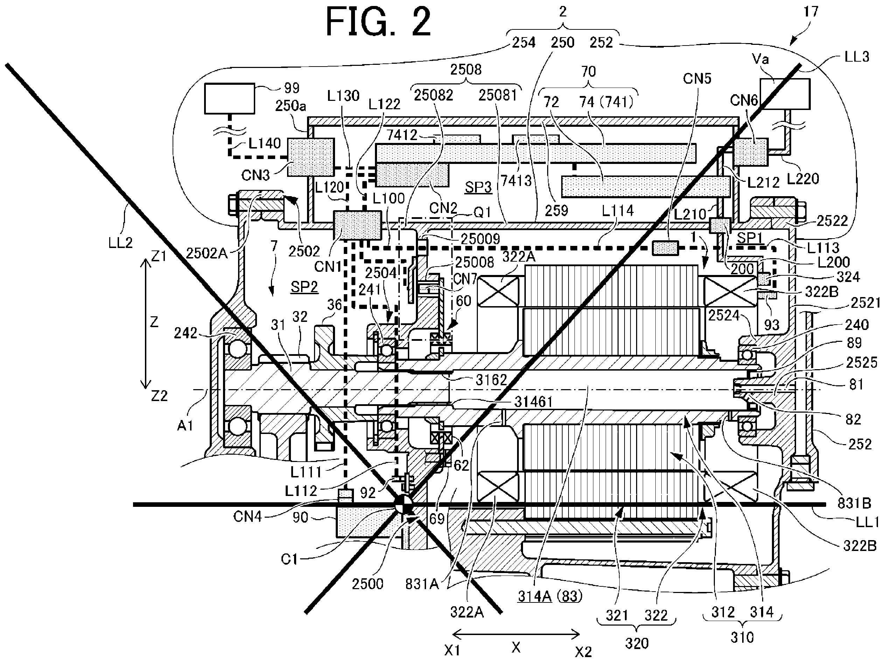

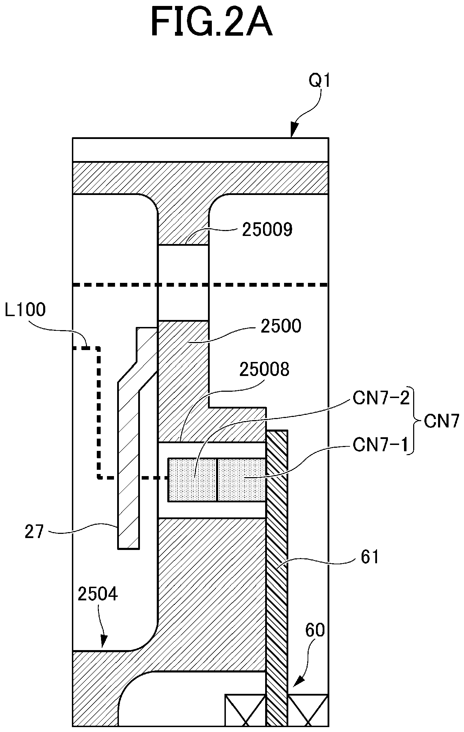

FIG. 2 is a sectional view schematically showing a main part of the vehicle drive device 17. In FIG. 2, a Z direction and Z1 and Z2 sides in the Z direction are defined. The Z direction is perpendicular to the axial direction and represents an up-down direction with the Z1 side as an upper side.

The vehicle drive device 17 includes the rotary electric machine 1, the power transmission mechanism 7, and a drive device 70 housed in a case 2.

The case 2 may be made of, for example, aluminum. The case 2 can be formed by casting etc. The case 2 includes a motor case 250, a motor cover 252, a gear case 254, and a gear cover 259.

The motor case 250 forms a motor housing chamber SP1 that houses the rotary electric machine 1 inside. The formation of the motor housing chamber SP1 inside means that the motor housing chamber SP1 is at least partially surrounded by a wall, and the motor housing chamber SP1 need not be closed completely by the wall. The same applies to other chambers such as a gear housing chamber SP2. The motor case 250 includes a peripheral wall portion that surrounds the radially outer side of the rotary electric machine 1. Although the motor case 250 is an integrally molded member, the motor case 250 may be realized by connecting a plurality of members.

In the example shown in FIG. 2, the motor case 250 includes a first partition wall portion 2500 that separates the motor housing chamber SP1 and the gear housing chamber SP2 in the axial direction. The first partition wall portion 2500 faces a bottom portion 2521 (described later) of the motor cover 252 in the axial direction.

A connecting portion 2502 to the gear case 254, a bearing support portion 2504 that supports a bearing 241, etc. are formed on the X1 side of the first partition wall portion 2500 in the X direction. The bearing support portion 2504 is formed at a central portion of the first partition wall portion 2500 on the X1 side in the X direction (portion centered on the first axis A1) so as to protrude to the X1 side in the X direction. The bearing support portion 2504 is formed concentrically with the first axis A1.

The motor cover 252 is connected to the X2 side of the motor case 250 in the X direction. The motor cover 252 is a cover that covers the X2 side of the motor housing chamber SP1 in the X direction. In this case, the motor cover 252 may cover the motor case 250 so as to close the opening of the motor case 250 on the X2 side in the X direction completely or substantially completely. Part of the motor housing chamber SP1 on the X2 side in the X direction may be formed by the motor cover 252.

The motor case 250 includes an inverter case portion 250a, and the inverter case portion 250a forms an inverter housing chamber SP3 inside. The inverter housing chamber SP3 houses the drive device 70 that drives the rotary electric machine 1. The inverter housing chamber SP3 extends in the axial direction so as to adjoin the motor housing chamber SP1 and the gear housing chamber SP2 in a radial direction. In the present embodiment, the inverter housing chamber SP3 is disposed above the motor housing chamber SP1 and the gear housing chamber SP2 (on the Z1 side in the Z direction). The motor case 250 includes a second partition wall portion 2508 that separates the motor housing chamber SP1 and the gear housing chamber SP2 from the inverter housing chamber SP3 in the radial direction. The second partition wall portion 2508 may be realized by part of the peripheral wall portion of the motor case 250.

The gear cover 259 is provided so as to cover an upper opening of the inverter housing chamber SP3. The gear cover 259 may be fastened to an upper part of the inverter case portion 250a with bolts etc. In this way, the inverter case portion 250a forms the inverter housing chamber SP3 that is a closed space in cooperation with the gear cover 259. Thus, measures for EMC (Electromagnetic Compatibility) related to the drive device 70 (in particular, an inverter module 72 described later) can be realized appropriately, and problems such as spatial resonance can be reduced.

The drive device 70 includes the inverter module 72 and a control device 74.

The inverter module 72 includes an inverter (not shown). For example, the inverter includes, for each phase, power switching elements (e.g., MOSFETs: Metal-Oxide-Semiconductor Field Effect Transistors or IGBTs: Insulated Gate Bipolar Transistors) on a high-potential side and a low-potential side of a high-voltage battery Va. The power switching element on the high-potential side and the power switching element on the low-potential side form upper and lower arms. The inverter may include a plurality of sets of upper and lower arms for each phase. Each power switching element may be driven by PWM (Pulse Width Modulation) under the control of the control device 74 so that desired rotational torque is generated. The high-voltage battery Va is, for example, a battery with a relatively high rated voltage and may be, for example, a lithium-ion battery or a fuel cell.

The inverter module 72 may include, in addition to the inverter, a member that forms a coolant channel. The inverter housing chamber SP3 may house a smoothing capacitor etc.

The control device 74 controls the vehicle drive device 17. For example, the control device 74 controls the rotary electric machine 1 via the inverter. In the present embodiment, the control device 74 controls an electric oil pump 90.

The control device 74 includes a control board 741. Various electronic components for the inverter, such as an inverter MC (abbreviation for a microcomputer) 7412 and a power supply circuit 7413, are mounted on the control board 741. In the present embodiment, various electronic components (e.g., an inverter and a microcomputer) for the electric oil pump 90 described later are further mounted on the control board 741. The control board 741 may be realized by a plurality of boards.

In the present embodiment, as shown in FIG. 2, the inverter module 72 is disposed on the X2 side in the X direction with respect to the control board 741 of the control device 74. In other words, the control board 741 extends further to the X1 side in the X direction than the inverter module 72. Specifically, the inverter module 72 overlaps only the motor housing chamber SP1 when viewed in the radial direction, whereas the control board 741 overlaps the gear housing chamber SP2 when viewed in the radial direction. Therefore, the wiring length between a relay connector CN1 described later and a control board connector CN2 of the control board 741 (control device 74) can be shortened, and thus efficient wiring can be realized.

Since the control board 741 extends further to the X1 side in the X direction than the inverter module 72, low-voltage wires and circuit elements can be separated from high-voltage wires and circuit elements in the X direction. Specifically, in the inverter housing chamber SP3, most or all of the low-voltage wires and circuit elements can be disposed on the X1 side in the X direction, and most or all of the high-voltage wires and circuit elements can be disposed on the X2 side in the X direction. Therefore, it is possible to easily secure an insulation distance that should be secured between the low-voltage wires and circuit elements and the high-voltage wires and circuit elements.

In the present embodiment, a low-voltage external connector CN3 may be disposed on the side surface of the inverter case portion 250a on the X1 side in the X direction, and a high-voltage external connector CN6 may be disposed on the side surface of the inverter case portion 250a on the X2 side in the X direction. Therefore, the low-voltage external connector CN3 and the high-voltage external connector CN6 can be disposed in accordance with the positional relationship between the low-voltage wires and circuit elements and the high-voltage wires and circuit elements.

The control board 741 preferably has the control board connector CN2 at the end on the X1 side in the X direction. In the present embodiment, as shown in FIG. 2, the control board connector CN2 is provided at a position where the control board connector CN2 overlaps the gear housing chamber SP2 when viewed in the radial direction. Therefore, it is possible to shorten the wiring lengths of wires L120, L122 between the relay connector CN1 described later and the control board connector CN2. Further, it is possible to shorten the wiring length of a wire L130 between the low-voltage external connector CN3 and the control board connector CN2. In the present embodiment, the wires L120, L122 between the relay connector CN1 and the control board connector CN2 and the wire L130 between the low-voltage external connector CN3 and the control board connector CN2 extend to the X1 side in the X direction with respect to the control board connector CN2. Therefore, it is possible to efficiently secure the insulation distance of the various low-voltage wires (insulation distance from the high-voltage system).

The motor cover 252 is provided with a bearing 240 that rotatably supports a rotor 310. That is, the motor cover 252 includes a bearing support portion 2524 that supports the bearing 240.

As shown in FIG. 2, the bearing 240 is provided on the radially outer side at the end of a rotor shaft 314 on the X2 side. Specifically, the bearing 240 is supported by the motor cover 252 on the radially outer side of an outer race and supported by the outer peripheral surface of the rotor shaft 314 on the radially inner side of an inner race. In a modification, the bearing 240 may conversely be supported by the motor cover 252 on the radially inner side of the inner race and supported by the inner peripheral surface of the rotor shaft 314 on the radially outer side of the outer race.

In the example shown in FIG. 2, the motor cover 252 includes the circular bottom portion 2521 centered on the first axis A1, and a peripheral wall portion 2522 that protrudes to the X1 side in the X direction from the outer peripheral edge of the bottom portion 2521. An end face of the peripheral wall portion 2522 on the X1 side in the X direction is connected to the motor case 250. The cylindrical bearing support portion 2524 is formed at a central portion of the bottom portion 2521 on the X1 side in the X direction (portion centered on the first axis A1) so as to protrude to the X1 side in the X direction. The bearing support portion 2524 is formed concentrically with the first axis A1.

As shown in FIG. 2, an axially protruding portion 2525 is formed on the radially inner side of the cylindrical bearing support portion 2524 at the central portion of the bottom portion 2521 on the X1 side in the X direction (portion centered on the first axis A1). The axially protruding portion 2525 is formed at the central portion of the bottom portion 2521 on the X1 side in the X direction (portion centered on the first axis A1) so as to protrude to the X1 side in the X direction. A first oil passage 81 and a second oil passage 82 through which oil is supplied to a hollow interior 314A (axial oil passage 83) of the rotor shaft 314 may be formed in the axially protruding portion 2525. Oil may be supplied to the first oil passage 81 and the second oil passage 82 from the electric oil pump 90.

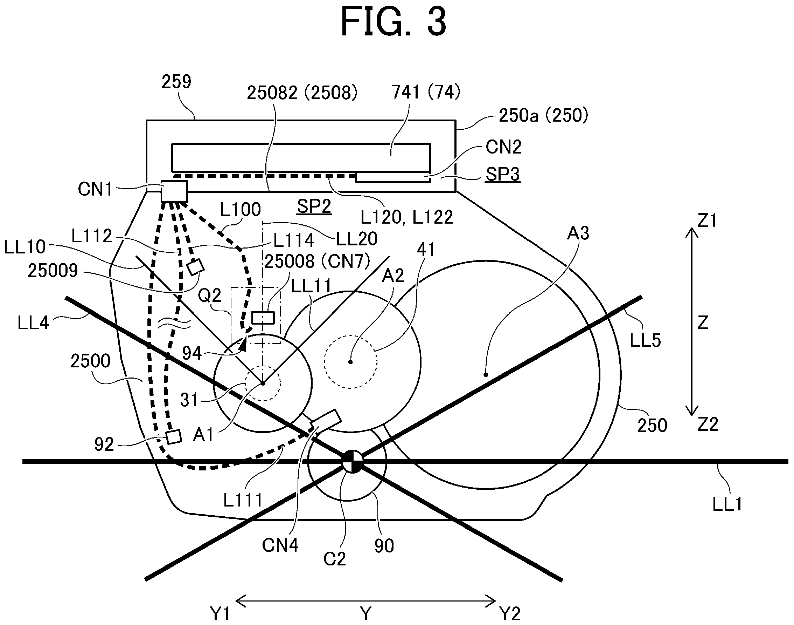

The electric oil pump 90 may be disposed, for example, in the gear housing chamber SP2 as shown in FIG. 2. In the present embodiment, the electric oil pump 90 is, for example, fixed to the first partition wall portion 2500 as shown in FIG. 2. The electric oil pump 90 may be disposed below the input shaft 31. The electric oil pump 90 may be disposed at a position where the electric oil pump 90 overlaps the counter shaft 41 when viewed in the up-down direction (see FIG. 3). An oil temperature sensor 92 may be disposed near the electric oil pump 90.

The gear case 254 forms the gear housing chamber SP2 that houses the power transmission mechanism 7 inside. The gear housing chamber SP2 is an oil-tight space that communicates with the motor housing chamber SP1. That is, the gear housing chamber SP2 together with the motor housing chamber SP1 forms an oil-tight space containing oil for cooling and/or lubricating the rotary electric machine 1 and the power transmission mechanism 7. The gear case 254 is connected to the X1 side of the motor case 250 in the X direction. In the present embodiment, the gear case 254 is connected to the motor case 250 so as to abut against a mating surface 2502A of the connecting portion 2502 of the first partition wall portion 2500 in the axial direction. The gear case 254 is a cover that covers the X1 side of the gear housing chamber SP2 in the X direction. The gear case 254 may be realized by connecting a plurality of members. Although the gear case 254 is a cover in the example shown in FIG. 2, the gear case 254 may have a peripheral wall portion that is relatively long in the X direction so as to surround the radially outer side of the power transmission mechanism 7 while having the function of a cover. In this case, part of the gear housing chamber SP2 on the X2 side in the X direction may be formed by the motor case 250 as shown in FIG. 2.

The rotor 310 includes a rotor core 312 and the rotor shaft 314.

The rotor core 312 may be made of, for example, magnetic stacked steel sheets having an annular shape. Permanent magnets (not shown) may be embedded in the rotor core 312. Alternatively, the permanent magnets (not shown) may be attached to the outer peripheral surface of the rotor core 312. The permanent magnets (not shown) may be arranged as appropriate. The rotor core 312 is fixed to the outer peripheral surface of the rotor shaft 314 and rotates integrally with the rotor shaft 314.

The rotor shaft 314 defines the first axis A1 that is the rotation axis of the rotary electric machine 1. The rotor shaft 314 is rotatably supported by the motor cover 252 via the bearing 240 on the X2 side with respect to a part where the rotor core 312 is fixed. The rotor shaft 314 is rotatably supported by the first partition wall portion 2500 of the motor case 250 via the bearing 241 on the X1 side of the rotary electric machine 1 in the X direction. In this manner, the rotor shaft 314 may be rotatably supported by the case 2 at both axial ends.

In the present embodiment, the rotor shaft 314 supports the bearing 241. The rotor shaft 314 axially abuts against an inner race (inner ring) of the bearing 241 on the X2 side in the X direction. The rotor shaft 314 bears a thrust load directed to the X2 side in the X direction via the inner race of the bearing 241. The rotor shaft 314 forms an annular space into which the bearing 241 is fitted in cooperation with the first partition wall portion 2500 of the case 2.

The rotor shaft 314 is connected to the input shaft 31 on the X1 side in the X direction so that power can be transmitted. In the present embodiment, for example, a spline 31461 is formed on the inner peripheral surface of the rotor shaft 314, and is splinefitted so as to mesh with a spline 3162 formed on the outer peripheral surface of the input shaft 31.

The rotor shaft 314 is, for example, a hollow pipe and has the hollow interior 314A. The hollow interior 314A may extend over the overall axial length of the rotor shaft 314. In the present embodiment, for example, the inner peripheral surface of the rotor shaft 314 has a constant bore diameter except for an area where the spline 31461 is formed. In other embodiments, the rotor shaft 314 may have a diameter reduced at both axial ends or at one axial end. In this case, the inner peripheral surface of the rotor shaft 314 may have a bore diameter reduced at both axial ends or at one axial end.

The hollow interior 314A of the rotor shaft 314 may function as the axial oil passage 83. That is, oil may be supplied to the hollow interior 314A via the first oil passage 81 and the second oil passage 82 of the motor cover 252. In this case, the rotor core 312 (and the permanent magnets if the permanent magnets are provided) can be cooled from the radially inner side by cooling the rotor shaft 314.

An oil reservoir weir portion 89 may be formed in the hollow interior 314A of the rotor shaft 314. That is, the rotor shaft 314 may have, on the inner peripheral surface, the weir portion 89 that protrudes radially inward over the entire circumference. In the example shown in FIG. 2, the weir portion 89 is formed of, for example, an annular plug fitted into the hollow interior 314A of the rotor shaft 314.

The rotor shaft 314 may have radial oil holes 831Aand 831B through which oil is discharged to coil end portions 322A, 322B of a stator 320, respectively.

The oil hole 831A may have an opening facing the coil end portion 322A in the radial direction, and the oil in the axial oil passage 83 may be supplied toward the coil end portion 322A. In the example shown in FIG. 2, the oil hole 831A extends linearly parallel to the radial direction, but may extend linearly in an oblique direction slightly inclined with respect to the radial direction.

The oil hole 831B may have an opening facing the coil end portion 322B in the radial direction, and the oil in the axial oil passage 83 may be supplied toward the coil end portion 322B. In the example shown in FIG. 2, the oil hole 831B extends linearly parallel to the radial direction, but may extend linearly in an oblique direction slightly inclined with respect to the radial direction.

The stator 320 includes a stator core 321 and a stator coil 322.

The stator core 321 may be made of, for example, magnetic stacked steel sheets having an annular shape. Teeth (not shown) protruding radially inward are radiately formed on the inner peripheral portion of the stator core 321.

The stator coil 322 may be formed, for example, such that an insulating coating is applied to a conductor having a rectangular cross section or a circular cross section. The stator coil 322 is wound around the teeth (not shown) of the stator core 321. For example, the stator coil 322 may be electrically connected by star connection or by delta connection in one or more parallel relationships.

The stator coil 322 includes the coil end portions 322A, 322B that are portions protruding axially outward from slots of the stator core 321. The coil end portion 322A is positioned on the X1 side, and the coil end portion 322B is positioned on the X2 side.

The power transmission mechanism 7 is disposed in the gear housing chamber SP2. Since the components of the power transmission mechanism 7 are as described above with reference to FIG. 1, the same reference numerals are given in FIG. 2, and description thereof will be omitted as appropriate.

In the present embodiment, a parking gear 36 of a parking lock mechanism is attached to the input shaft 31 of the power transmission mechanism 7. The parking lock mechanism includes a mechanism (not shown) that switches the parking gear 36 between a rotatable state and a non-rotatable state (locked state).

The parking gear 36 is a rotary member that rotates about the first axis A1. The parking gear 36 is connected to the input shaft 31 of the input member 3 so as to rotate integrally with the input shaft 31 of the input member 3. The parking gear 36 is disposed between the input gear 32 and the bearing 241 in the axial direction. The input shaft 31 is rotatably supported by the gear case 254 via a bearing 242 on the X1 side in the X direction.

The wiring structure of the present embodiment will be described with reference to FIGS. 2A and 3 and further to FIG. 2. FIG. 2A is an enlarged view of a portion Q1 in FIG. 2. FIG. 3 is a diagram schematically showing the gear housing chamber SP2 and the inverter housing chamber SP3 when the first partition wall portion 2500 is viewed from the X1 side in the X direction. In FIG. 2, in the wiring structure of the present embodiment, the low-voltage wires are schematically represented by dashed lines L100 to L140, and the high-voltage wires are represented by hatched rectangular lines L200 to L220. Each of the dashed lines L100 to L140 and the rectangular lines L200 to L220 may represent a plurality of wires. The routes of the dashed lines L100 to L140 and the rectangular lines L200 to L220 are shown schematically, and the details are set as appropriate. The wires etc. related to the dashed lines L100 to L140 may actually be supported by the case 2 with clamps etc. as appropriate. In FIG. 2, the wires related to the dashed lines L100 to L140 are shown as viewed from a Y1 side in FIG. 3.

The low-voltage wires include first wires L100, L120 that electrically connect a rotation angle sensor 60 and the drive device 70. The rotation angle sensor 60 acquires information on a rotation angle of the rotary electric machine 1 (rotation angle information). The rotation angle sensor 60 is provided at the end of the rotary electric machine 1 on the X1 side in the X direction (end near the gear housing chamber SP2). In the present embodiment, the rotation angle sensor 60 is provided, for example, at the end of the rotor shaft 314 on the X1 side in the X direction as shown in FIG. 2. The rotation angle sensor 60 may be, for example, a resolver. In this case, the non-rotary portion (stator portion) of the rotation angle sensor 60 may be fixed to the first partition wall portion 2500 as shown in FIG. 2. Hereinafter, when referring to only one of the first wires L100, L120, the wire will simply be referred to as "wire L100" or "wire L120".

As shown in FIG. 2, the first wires L100, L120 are routed so as to extend from the motor housing chamber SP1 to the gear housing chamber SP2 through the first partition wall portion 2500 and extend from the gear housing chamber SP2 to the inverter housing chamber SP3 through the second partition wall portion 2508.

One end of the wire L100 is electrically connected to the rotation angle sensor 60, and the other end is electrically connected to the relay connector CN1. In the present embodiment, the rotation angle sensor 60 has the non-rotary portion (coil portion 62 etc.) mounted on a board 61, and is supported by the first partition wall portion 2500 via the board 61.

As shown in FIG. 2A, the board 61 is supported by the first partition wall portion 2500 so as to extend along the first partition wall portion 2500 and abut against the first partition wall portion 2500 in the axial direction. The board 61 has, for example, an annular shape centered on the first axis A1 when viewed in the axial direction, and supports the coil portion 62 of the rotation angle sensor 60. In the example shown in FIG. 2A, the board 61 is fixed to a part of the first partition wall portion 2500 below the first axis A1 with an axial bolt 69 (see FIG. 2).

The wire L100 has a connector CN7, and may be a harness in a section from the relay connector CN1 to the connector CN7. The wire L100 includes a wire (not shown) on the board 61 from the connector CN7. The board 61 may be a printed circuit board. In this case, the wire on the board 61 may be a printed wire. One end of the wire on the board 61 is connected to the coil portion 62, and the other end is connected to a board-side connector portion CN7-1 of the connector CN7. The connector CN7 includes the board-side connector portion CN7-1 and a harness-side connector portion CN7-2. The connector CN7 establishes electrical conduction by fitting the board-side connector portion CN7-1 and the harness-side connector portion CN7-2. The board-side connector portion CN7-1 and the harness-side connector portion CN7-2 are fitted to each other in a manner that they can be inserted and removed in the axial direction. In the present embodiment, for example, the board-side connector portion CN7-1 is a male type, and the harness-side connector portion CN7-2 is a female type, but the types may be reversed.

The connector CN7 is disposed above the first axis A1. For example, the connector CN7 is disposed above the rotation angle sensor 60 as shown in FIG. 2. Therefore, the connector CN7 can appropriately be protected from oil as described later. Details of this effect will be described later.

The connector CN7 is provided on the X1 side of the board 61 in the X direction (side that faces or abuts against the first partition wall portion 2500). Therefore, it is possible to effectively reduce the possibility that the connector CN7 is exposed to the oil in the motor housing chamber SP1.

In this case, the connector CN7 is preferably disposed in an axial through hole 25008 formed in the first partition wall portion 2500. That is, the axial through hole 25008 is formed in the first partition wall portion 2500, and the wire L100 from the rotation angle sensor 60 is drawn out through the through hole 25008. Therefore, it is possible to shorten the wiring length in the section from the rotation angle sensor 60 to a point where the wire passes through the first partition wall portion 2500 (where the wire is drawn out to the gear housing chamber SP2 through the through hole 25008). By disposing the connector CN7 in the through hole 25008, the connector CN7 is less likely to be exposed to oil, and the connector CN7 can appropriately be protected from oil. Details of this effect will be described later.

In the present embodiment, as shown in FIG. 2A, a connector cover 27 is fixed to the first partition wall portion 2500 on the side that faces the gear housing chamber SP2. The connector cover 27 overlaps the connector CN7 (harness-side connector portion CN7-2 and board-side connector portion CN7-1) when viewed in the axial direction. Therefore, the connector CN7 is less likely to be exposed to oil, and the connector CN7 can appropriately be protected from oil. The connector cover 27 preferably overlaps the entire connector CN7 when viewed in the axial direction so as to cover the entire connector CN7, but may be provided so as to overlap only part of the connector CN7.

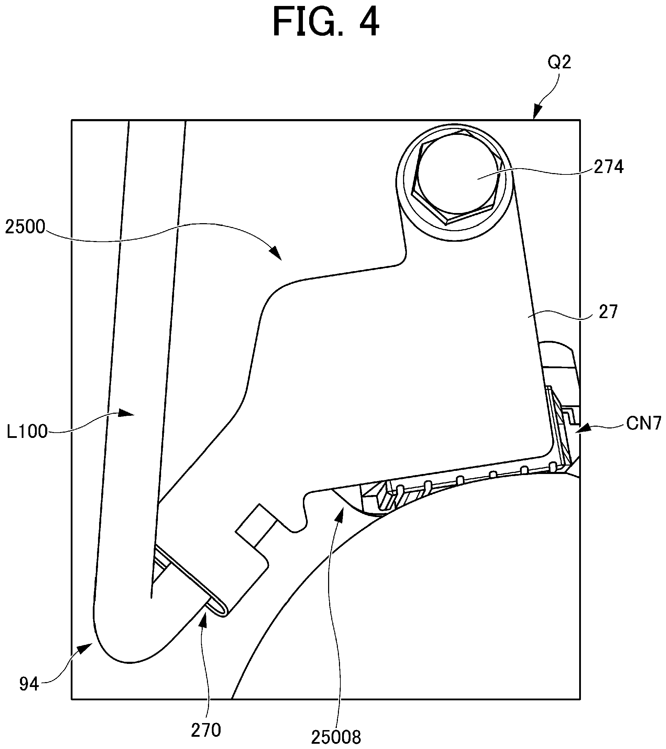

As schematically shown in FIG. 3, the wire L100 is preferably routed from the relay connector CN1 to the harness-side connector portion CN7-2 with a downwardly convex curved portion 94 (see FIG. 4 as well). With the curved portion 94, it is possible to reduce the flow of oil that may flow to the connector CN7 along the wire L100.

As shown in FIG. 2, the relay connector CN1 has a function of relaying various wires between the gear housing chamber SP2 and the inverter housing chamber SP3. The relay connector CN1 is provided in a portion 25082 of the second partition wall portion 2508 that separates the gear housing chamber SP2 in the radial direction. As shown in FIG. 3, the relay connector CN1 may be disposed on the Y1 side in the Y direction with respect to the input shaft 31 (first axis A1).

One end of the wire L120 is electrically connected to the relay connector CN1, and the other end is electrically connected to the control board connector CN2 of the control board 741. The control board connector CN2 may be electrically connected to the microcomputer 7412 via a printed circuit (not shown) on the control board 741. In this way, the rotation angle sensor 60 is electrically connected to the control device 74 via the wire L100, the relay connector CN1, the wire L120, and the control board connector CN2.

In the example shown in FIG. 2, the control board connector CN2 may be electrically connected to an upper-level ECU (Electronic Control Unit) 99 via the low-voltage external connector CN3. Specifically, the control board connector CN2 and the low-voltage external connector CN3 are electrically connected by the wire L130, and the low-voltage external connector CN3 and the upper-level ECU 99 are electrically connected by the wire L140. The wire L140 may include a bus based on a CAN (controller area network), Ethernet (registered trademark), etc.

In the present embodiment, the wire L120 is a bundle of a plurality of wires, and electrically connects wires from other electronic components in addition to the rotation angle sensor 60 from the relay connector CN1 to the control board connector CN2. The wire L120 may be realized by a flexible board etc. together with the wire L122 described later.

According to the present embodiment, the rotation angle sensor 60 is disposed at the end of the rotor shaft 314 on the X1 side in the X direction. Therefore, more efficient wiring can be realized than in a case where the rotation angle sensor 60 is disposed at the end of the rotor shaft 314 on the X2 side in the X direction.

Since the first wires L100, L120 are relayed by the relay connector CN1 provided in the second partition wall portion 2508, the first wires L100, L120 need not pass through the exterior part of the vehicle drive device 17 (exterior part different from the motor housing chamber SP1, the gear housing chamber SP2, and the inverter housing chamber SP3). As a result, no special housing chamber is required for the rotation angle sensor 60. This eliminates the need for sealing materials, cover members, etc. that may be necessary when drawing the wires to the exterior part. Therefore, the number of components can be reduced and the ease of attachment can be secured satisfactorily.

For example, when attaching the rotary electric machine 1 into the motor case 250 to which the relay connector CN1 is attached, the wire L100 can be drawn out to the gear housing chamber SP2 and connected to the relay connector CN1. Therefore, the rotary electric machine 1 can be attached by relatively easy work. Since the wires related to the rotation angle sensor 60 (such as the wire L100) are concentrated on the X1 side with respect to the first partition wall portion 2500, the rotary electric machine 1 can be attached without the possibility of interference with the wires related to the rotation angle sensor 60 on the X2 side with respect to the first partition wall portion 2500. This improves the ease of attaching the rotary electric machine 1. The routing of the wires related to the rotation angle sensor 60 (routing of the wire L100 etc. on the X1 side with respect to the first partition wall portion 2500) can be performed before or after attaching the rotary electric machine 1. Therefore, the degree of freedom in attachment can be increased.

As described above, according to the present embodiment, the first wires L100, L120 related to the vehicle drive device 17 can be implemented with satisfactory ease of attachment without substantially increasing the axial size of the vehicle drive device 17.

In the present embodiment, the low-voltage wires further include a wire L111 from a connector CN4 for the electric oil pump 90. The electric oil pump 90 is electrically connected to the control device 74 via the wire L111.

One end of the wire L111 is electrically connected to the connector CN4, and the other end is electrically connected to the relay connector CN1. As shown in FIG. 3, the wire L111 may be routed around the lower side of the input shaft 31. The wire L111 electrically connected to the relay connector CN1 is electrically connected to the control device 74 via the wire L120. In this way, the electric oil pump 90 is electrically connected to the control device 74 via the wire L111, the relay connector CN1, the wire L120, and the control board connector CN2.

In the present embodiment, the low-voltage wires further include a wire L112 from the oil temperature sensor 92. The oil temperature sensor 92 detects the temperature of oil discharged from the electric oil pump 90. The oil temperature sensor 92 supplies an electric signal according to the temperature of oil to the control device 74 via the wire L112. The oil temperature sensor 92 may be provided near the electric oil pump 90 (near the discharge port of the electric oil pump 90). In the present embodiment, the oil temperature sensor 92 is fixed to the first partition wall portion 2500 as shown in FIG. 2. The oil temperature sensor 92 may be provided below the input shaft 31 as shown in FIG. 2. The oil temperature sensor 92 may be provided on the Y1 side in the Y direction with respect to the input shaft 31 as shown in FIG. 3. One end of the wire L112 is electrically connected to the oil temperature sensor 92, and the other end is electrically connected to the relay connector CN1. The wire L112 electrically connected to the relay connector CN1 is electrically connected to the control device 74 via the wire L120. In this way, the oil temperature sensor 92 is electrically connected to the control device 74 via the wire L112, the relay connector CN1, the wire L120, and the control board connector CN2.

In the present embodiment, the low-voltage wires further include second wires L113, L114, L122 from a thermistor 93. The thermistor 93 is provided on the stator 320 (e.g., the stator coil 322). Hereinafter, when referring to one or two of the second wires L113, L114, L122, the wire(s) will simply be referred to as "wire L113", "wire L114", or "wire L122".

In the present embodiment, the thermistor 93 is provided on the coil end portion 322B on the X2 side in the X direction. In this case, the second wires L113, L114 can be routed more easily than in a case where the thermistor 93 is provided on the coil end portion 322A on the X1 side in the X direction. That is, the second wires L113, L114 can easily be routed by using the opening of the motor case 250 on the X2 side in the X direction after the rotary electric machine 1 is attached to the motor case 250.

One end of the wire L113 is electrically connected to the thermistor 93, and the other end is electrically connected to an intermediate connector CN5. As shown in FIG. 2, the intermediate connector CN5 is disposed in the motor housing chamber SP1 by using a space between the stator 320 and the motor case 250 in the radial direction.

One end (end on the X2 side in the X direction) of the wire L114 is electrically connected to the intermediate connector CN5, and the other end (end on the X1 side in the X direction) is electrically connected to the relay connector CN1. The wire L114 extends from the motor housing chamber SP1 to the gear housing chamber SP2 by passing through the first partition wall portion 2500 from the intermediate connector CN5, and is electrically connected to the relay connector CN1. In this case, the wire L114 may pass through the first partition wall portion 2500 through an axial through hole 25009 formed in the first partition wall portion 2500. The wire L114 extends above the input shaft 31 (first axis A1) in the gear housing chamber SP2. When the intermediate connector CN5 is disposed above the first axis A1 and on the Y1 side in the Y direction with respect to the first axis A1, the wire L114 can be routed linearly with a relatively small wiring length. The wire L114 electrically connected to the relay connector CN1 in this way is electrically connected to the wire L122 by the relay connector CN1.

Similarly to the wire L120 out of the first wires L 100, L120 described above, one end of the wire L122 is electrically connected to the relay connector CN1, and the other end is electrically connected to the control board connector CN2 of the control board 741. In this way, the thermistor 93 is electrically connected to the control device 74 via the wire L113, the wire L114, the relay connector CN1, the wire L122, and the control board connector CN2.

According to the present embodiment, all the low-voltage wires can be concentrated on the single relay connector CN1, and can reach the inverter housing chamber SP3 through the second partition wall portion 2508 via the single relay connector CN1. Therefore, it is possible to realize a more efficient configuration than in a case of using a plurality of relay connectors (e.g., one relay connector for each of the motor housing chamber SP1 and the gear housing chamber SP2).

According to the present embodiment, all the low-voltage wires are relayed by the relay connector CN1 provided in the second partition wall portion 2508. Therefore, the low-voltage wires need not pass through the exterior part of the vehicle drive device 17 (exterior part different from the motor housing chamber SP1, the gear housing chamber SP2, and the inverter housing chamber SP3). This eliminates the need for sealing materials, cover members, etc. that may be necessary when passing the wires through the exterior part. Therefore, the ease of attachment can be secured satisfactorily.

As described above, according to the present embodiment, all the low-voltage wires related to the vehicle drive device 17 can be implemented with satisfactory ease of attachment without substantially increasing the axial size of the vehicle drive device 17.

The high-voltage wires include a busbar (power line) L200 from a terminal portion 324 of the stator 320 to a terminal block 200 provided in the second partition wall portion 2508, and a busbar L210 from the terminal block 200 to the inverter module 72. Ends of the individual phases of the stator coil 322 (ends of crossover wires) are electrically connected to the terminal portion 324.

The terminal block 200 is provided in a portion 25081 of the second partition wall portion 2508 that separates the motor housing chamber SP1 in the radial direction. The terminal block 200 may have, for example, the busbars L200, L210 integrated by a resin portion (not shown). The busbar L210 from the terminal block 200 is electrically connected to the inverter module 72 in the inverter housing chamber SP3. A busbar L212 from the inverter module 72 is electrically connected to the high-voltage external connector CN6. A busbar L220 from the high-voltage external connector CN6 is electrically connected to the high-voltage battery Va.

As described above, in the present embodiment, the high-voltage wires are realized on the X2 side in the X direction in the inverter housing chamber SP3. Therefore, it is possible to easily secure a sufficient insulation distance from the low-voltage wires disposed on the X1 side in the X direction as described above.

In the present embodiment, as described above, the case 2 retains the oil for cooling and/or lubricating the rotary electric machine 1 and the power transmission mechanism 7 in the motor housing chamber SP1 and the gear housing chamber SP2. Hereinafter, the oil in the motor housing chamber SP1 and the gear housing chamber SP2 will also be simply referred to as "oil in the case 2".

When the vehicle is stopped in a horizontal posture, the surface (upper surface) of the oil in the case 2 is kept as a horizontal surface. FIGS. 2 and 3 schematically show a line LL1 along the surface of the oil in the case 2 in such a steady state. The height of the surface of the oil in the case 2 in the steady state may be adjusted as appropriate depending on the disposition of the power transmission mechanism 7 etc.

When the vehicle is located on a slope or subjected to various accelerations while traveling, the oil in the case 2 is shaken and the oil surface changes from the horizontal line LL1. FIG. 2 schematically shows lines LL2, LL3 of the oil surface that may change when subjected to an acceleration in the X direction (e.g., in a lateral direction). As shown in FIG. 2, the surface of the oil in the case 2 tends to be inclined (in a roll direction) about a longitudinal axis passing through a center C1 of the vehicle in the X direction.

The center of the case 2 in the X direction does not necessarily coincide with the center C1 of the vehicle in the X direction. As schematically shown in FIG. 2, a disposition (mounting form) in which the end of the rotor shaft 314 on the X1 side in the X direction is closer to the center C1 of the vehicle in the X direction than the end of the rotor shaft 314 on the X2 side in the X direction is likely to be adopted. In such a mounting form, the end of the rotor shaft 314 on the X1 side in the X direction is less likely to be immersed in the oil than the end of the rotor shaft 314 on the X2 side in the X direction as can be seen from the lines LL2, LL3.

In this regard, according to the present embodiment, as described above, the rotation angle sensor 60 is provided at the end of the rotary electric machine 1 on the X1 side in the X direction (end near the gear housing chamber SP2), and accordingly, the board 61 and the connector CN7 are provided at the end of the rotor shaft 314 on the X1 side in the X direction. Therefore, the connector CN7 is less likely to be immersed in the oil even if the oil in the case 2 is shaken in the roll direction due to the posture or behavior of the vehicle.

FIG. 3 schematically shows lines LL4, LL5 of the oil surface that may change when subjected to an acceleration in the Y direction (e.g., in a longitudinal direction). As shown in FIG. 3, the surface of the oil in the case 2 tends to be inclined (in a pitch direction) about a lateral axis passing through a center C2 of the vehicle in the Y direction.

The center of the case 2 in the Y direction does not necessarily coincide with the center C2 of the vehicle in the Y direction. As schematically shown in FIG. 3, a disposition (mounting form) in which the center C2 of the vehicle in the Y direction is in an extension range of the case 2 in the Y direction is likely to be adopted. In such a mounting form, a sectored area defined by lines LL10, LL11 is less likely to be immersed in the oil as can be seen from the lines LL4, LL5 and the lines LL10, LL11. At this time, the lines LL10, LL11 are lines that define the boundary of the sectored area within ±45 degrees about the first axis A1 assuming that the top point in the vertical direction passing through the first axis A1 (long dashed short dashed line LL20) is defined as 0 degrees.

In this regard, according to the present embodiment, the connector CN7 is disposed above the first axis A1. Therefore, the connector CN7 can easily be positioned within the sectored area defined by the lines LL10, LL11. Therefore, the connector CN7 is less likely to be immersed in the oil even if the oil in the case 2 is shaken in the pitch direction due to the posture or behavior of the vehicle.

In this way, the present embodiment can realize the disposition of the connector CN7 that is less likely to be immersed in the oil even if the oil in the case 2 is shaken due to the posture or behavior of the vehicle.

Next, a structure for protecting the connector CN7 from oil will further be described with reference to FIGS. 4 and 5 as well as FIG. 2A.

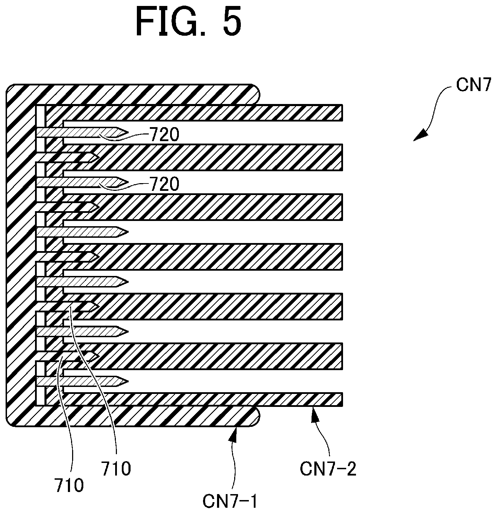

FIG. 4 is an illustration of the connector cover 27 and is an enlarged view of a portion Q2 in FIG. 3. FIG. 5 is a schematic sectional view illustrating a labyrinth structure of the connector CN7.

As described above, the connector cover 27 overlaps the connector CN7 when viewed in the axial direction. In FIG. 4, the substantially entire connector CN7 is covered with the connector cover 27, and only part of the connector CN7 is visible. In the example shown in FIG. 4, the connector cover 27 is a bracket and is fixed to the first partition wall portion 2500 with a bolt 274. In the example shown in FIG. 4, the connector cover 27 includes a clamp portion 270 that clamps part of the wire L 100 in the form of a harness. The clamp portion 270 clamps a portion of the wire L100 closer to the harness-side connector portion CN7-2 than the lowest point of the curved portion 94. In this way, the connector cover 27 functions as the bracket that clamps part of the wire L100, and also has the function of protecting the connector CN7 from oil.

In the gear housing chamber SP2, the oil that accumulates at the bottom is raked up when the differential gear mechanism 5 is operated. Therefore, there is a possibility that the connector CN7 is directly exposed to the oil thus raked up. There is also a possibility that the raked-up oil flows downward along the surface of the first partition wall portion 2500 on the X1 side in the X direction and reaches the connector CN7. There is also a possibility that the raked-up oil runs along the wire L100 in the form of a harness and reaches the connector CN7.

In this regard, according to the present embodiment, the connector cover 27 is preferably provided as described above. Therefore, the oil flowing toward the connector CN7 in the raked-up oil is likely to come into contact with the connector cover 27. As a result, it is possible to effectively reduce the possibility that the connector CN7 is directly exposed to the oil.

In the present embodiment, the connector CN7 is preferably disposed in the through hole 25008 of the first partition wall portion 2500 as described above. Therefore, it is possible to effectively reduce the possibility that the oil runs along the surface of the first partition wall portion 2500 on the X1 side in the X direction and reaches the connector CN7. In order to promote such an effect, the connector CN7 may be disposed in the through hole 25008 so that the entire connector CN7 is housed in the through hole 25008 (i.e., so that the harness-side connector portion CN7-2 etc. are not exposed to the gear housing chamber SP2 when viewed in a direction perpendicular to the first axis A1).

In the present embodiment, the wire L100 is preferably routed with the curved portion 94 as described above. Therefore, it is possible to effectively reduce the possibility that the oil runs along the wire L100 in the form of a harness and reaches the connector CN7 (the oil rises against the gravity). In order to promote such an effect, the wire L100 may be routed so that the lowest point of the curved portion 94 is positioned below the connector CN7. When the wire L100 has the curved portion 94, the extra length of the wire L100 causes slack and the wire L100 is likely to vibrate. According to the present embodiment, however, the clamp portion 270 of the connector cover 27 can prevent the vibration of the wire L100.

As described above, according to the present embodiment, it is possible not only to realize the disposition of the connector CN7 that is less likely to be immersed in the oil, but also to reduce the possibility that the oil in the gear housing chamber SP2 reaches the connector CN7 directly or along the wire L100. As a result, it is possible to reduce the waterproofness of the connector CN7. Therefore, it may be possible to adopt, for example, a low-cost, commercially available, non-waterproof connector CN7. The non-waterproof connector does not have a sealing rubber member at the fitting portion, and therefore does not have a sealing function using such a sealing rubber member.

As shown in FIG. 5, the connector CN7 may have a labyrinth structure instead of using the sealing rubber member. In this case, it is possible to reduce, even if a foreign object (e.g., a minute metal piece) that may be mixed into the oil enters the connector CN7, the possibility that the foreign object reaches an electrical contact portion. Specifically, in the example shown in FIG. 5, the board-side connector portion CN7-1 of the connector CN7 has comb-shaped protrusions 710 each provided between terminals 720. Therefore, the creepage distance can be secured efficiently, and the possibility of short circuits due to foreign objects can be reduced effectively.

Although the embodiments are described in detail above, the present disclosure is not limited to the specific embodiments, and various modifications and changes can be made within the scope of the claims. It is also possible to combine all or part of the constituent elements of the embodiments described above. Of the effects of each embodiment, those related to dependent claims are additional effects distinct from generic concepts (independent claims).

### Description of the Reference Numerals

1 ... rotary electric machine, 314 ... rotor shaft (rotary shaft member), 2 ... case (housing member), 2500 ... first partition wall portion, 25008 ... through hole, 2508 ... second partition wall portion, 27 ... connector cover (cover member), 270 ... clamp portion, 7 ... power transmission mechanism, 17 ... vehicle drive device, 60 ... rotation angle sensor, 61 ... board, 70 ... drive device, 94 ... curved portion, L100, L120 ... first wire (wire), CN7 ... connector (first partition wall-side connector), CN1 ... relay connector (second partition wall-side connector), SP1 ... motor housing chamber (first housing chamber), SP2 ... gear housing chamber (second housing chamber), SP3 ... inverter housing chamber (third housing chamber)

## Claims

1. A vehicle drive device comprising:
a rotary electric machine having an axial direction intersecting an up-down direction;
a power transmission mechanism connected to one axial end side of a rotary shaft member of the rotary electric machine and configured to transmit, to a wheel, power based on rotational torque generated by the rotary electric machine;
a drive device configured to drive the rotary electric machine;
a housing member that forms inside a first housing chamber that houses the rotary electric machine and a second housing chamber that houses the power transmission mechanism, includes a first partition wall portion that separates the first housing chamber and the second housing chamber in the axial direction, and retains oil in the first housing chamber and the second housing chamber;
a rotation angle sensor mounted on a board supported by the first partition wall portion in the first housing chamber and configured to acquire rotation angle information of the rotary electric machine; and
a wire that electrically connects the rotation angle sensor and the drive device, wherein
the wire includes a first partition wall-side connector on a side of the board that faces the first partition wall portion in the axial direction and above the rotary shaft member.

2. The vehicle drive device according to claim 1, wherein:
the first partition wall portion has a through hole extending through the first partition wall portion in the axial direction; and
at least part of the first partition wall-side connector is disposed in the through hole.

3. The vehicle drive device according to claim 2, wherein the entire first partition wall-side connector is disposed in the through hole.

4. The vehicle drive device according to claim 2, further comprising a cover member fixed to the first partition wall portion in the second housing chamber, wherein the cover member overlaps the first partition wall-side connector when viewed in the axial direction.

5. The vehicle drive device according to claim 4, wherein:
the housing member further forms inside a third housing chamber that houses the drive device, and further includes a second partition wall portion that separates the second housing chamber and the third housing chamber in a radial direction;
the wire is routed from a second partition wall-side connector provided on the second partition wall portion to the first partition wall-side connector with a downwardly convex curved portion; and
the cover member includes a clamp portion that clamps the wire.

6. The vehicle drive device according to any one of claims 1 to 5, wherein the first partition wall-side connector is a non-waterproof connector with no sealing rubber member, and is disposed, when viewed in the axial direction, in a sectored area within ±45 degrees about the rotary shaft member assuming that a top point in a vertical direction passing through the rotary shaft member is defined as 0 degrees.
